# EUROPEAN PATENT APPLICATION

(11) **EP 4 764 463 A1**
(43) Date of publication of application: **24.06.2026**
(21) Application number: 24383451.2
(22) Date of filing: 23.12.2024
(51) Int. Cl.: G01N 21/88, G01N 21/952, G01N 21/954

(54) **OUTER APPEARANCE INSPECTION APPARATUS**

(71) Applicant: KONICA MINOLTA, INC., Tokyo 100-7015 (JP); Eines Systems, S.L.U., 46440 Almussafes Valencia (ES)
(72) Inventor: Perera Vernetta, Antoni, 46440 Almussafes (ES); Ferrandis Sanmartin, Raul, 46440 Almussafes (ES); Tetsuya, Katagiri, Tokyo, 100-7015 (JP)
(74) Representative: Elzaburu S.L.P.

(57) **Abstract**

An outer appearance inspection apparatus includes: a first illuminator that illuminates a surface of an inspection target object; an imager that images the surface of the inspection target object illuminated by the first illuminator; and an inspector that inspects a surface state of the inspection target object based on the imaged image imaged by the imager. The first illuminator includes a light source that surrounds a center axis of the inspection target object. A normal line of a light emitting surface of the light source is perpendicular to the center axis or equal to or within 45 degrees with respect to the center axis, and a length of the light source in a direction along the center axis is equal to or larger than a radius of the light source surrounding the center axis.

## Description

### BACKGROUND OF THE INVENTION

### TECHNICAL FIELD

The present invention relates to an outer appearance inspection apparatus.

### DESCRIPTION OF RELATED ART

Conventionally, an outer appearance inspection has been performed for quality control in manufacturing processes of various products. For example, Japanese Unexamined Patent Publication No. H 10-282014 describes a surface defect detection device for detecting defects such as cracks and scratches formed on a surface of an inspection target object.

However, in the invention described in Japanese Unexamined Patent Publication No. H 10-282014, since diffused light of light emitted from a light source to the inspection target object is not sufficient, there is a possibility that detection accuracy of the defect such as the scratches on the surface of the inspection target object is low.

### SUMMARY OF THE INVENTION

An object of the present invention is to provide an outer appearance inspection apparatus capable of performing a highly accurate visual inspection.

In order to solve the above problem, the outer appearance inspection apparatus according to aspect 1 includes, a first illuminator that illuminates a surface of an inspection target object; an imager that images the surface of the inspection target object illuminated by the first illuminator; and an inspector that inspects a surface state of the inspection target object based on the imaged image imaged by the imager, wherein, the first illuminator includes a light source that surrounds a center axis of the inspection target object, and a normal line of a light emitting surface of the light source is perpendicular to the center axis or equal to or within 45 degrees with respect to the center axis, and a length of the light source in a direction along the center axis is equal to or larger than a radius of the light source surrounding the center axis.

The invention described in aspect 2 provides the outer appearance inspection apparatus according to aspect 1, wherein the length of the light source in the direction along the center axis is less than or equal to twice the radius of the light source surrounding the center axis.

The invention described in aspect 3 provides the outer appearance inspection apparatus according to aspect 1, wherein the distance from the light source to the inspection target object in the direction along the center axis is equal to or less than the radius of the light source surrounding the center axis.

The invention described in aspect 4 provides the outer appearance inspection apparatus according to aspect 1, wherein the inspection target object includes a through hole that penetrates through the inspection target object in the direction along the center axis, and the outer appearance inspection apparatus further comprises a second illuminator that illuminates the surface of the inspection target object from a side opposite to the first illuminator with the inspection target object interposed therebetween.

The invention described in aspect 5 provides the outer appearance inspection apparatus according to aspect 1, wherein the first illuminator includes a polarizing plate on a light emitting surface side of the light source, and the imager images a plurality of polarization imaged images including different polarizing directions.

According to the present invention, high-precision outer appearance inspection can be performed.

### BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present invention, and wherein:
FIG. 1 is a block diagram of an outer appearance inspection apparatus according to the present embodiment;
FIG. 2 is a perspective view illustrating a configuration of an inspection unit;
FIG. 3 is a perspective view illustrating another example of a configuration of the inspection unit;
FIG. 4 is a plan view illustrating a configuration of a first illumination section;
FIG. 5 is a perspective view illustrating another example of a configuration of the first illumination section;
FIG. 6 is a perspective view illustrating another example of a configuration of the first illumination section;
FIG. 7 is a perspective view illustrating another example of a configuration of the first illumination section;
FIG. 8 is a flowchart illustrating a flow of outer appearance inspection processing;
FIG. 9 is a plan view illustrating a configuration of a first illumination section according to a modification example 1; and
FIG. 10 is a flowchart showing a flow of the outer appearance inspection processing according to the modification example 1.

### DETAILED DESCRIPTION

Hereinafter, one or more embodiments of the present invention will be described with reference to the drawings. However, the scope of the invention is not limited to the disclosed embodiments.

Hereinafter, embodiments of the present invention will be described with reference to the drawings. However, the present invention is not limited to those illustrated in the drawings.

### <Configuration of Outer Appearance Inspection Apparatus>

A configuration of an outer appearance inspection apparatus according to the present embodiment will be described.

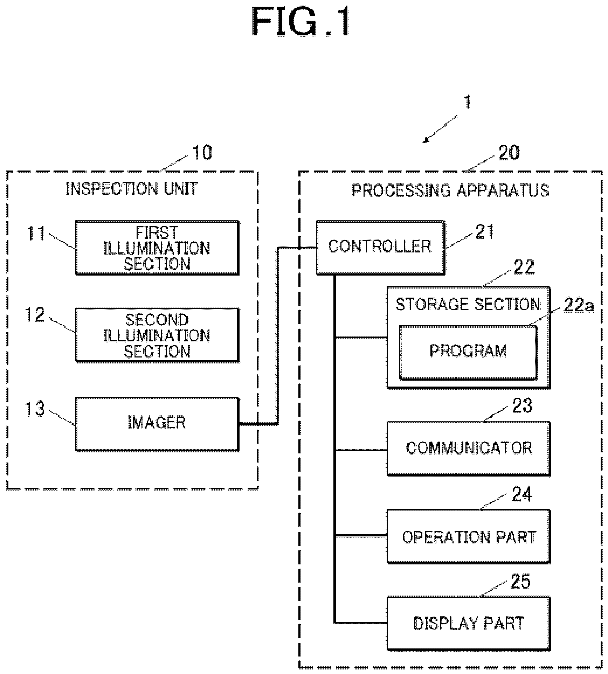

FIG. 1 is a block diagram of an outer appearance inspection apparatus 1 according to the present embodiment.

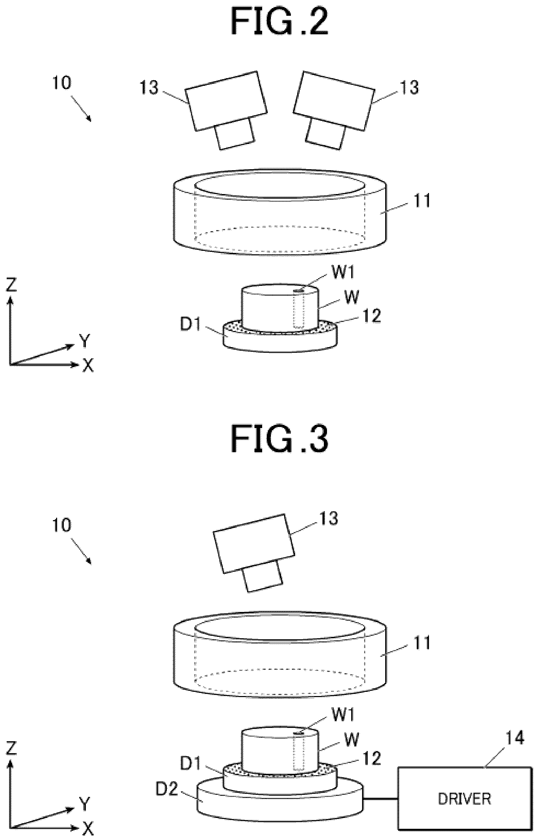

As illustrated in FIG. 1, the outer appearance inspection apparatus 1 includes an inspection unit 10 and a processing apparatus 20. FIG. 2 is a perspective view illustrating a configuration of the inspection unit 10. In FIG. 2, a X-axis direction and a Y-axis direction are two horizontal directions orthogonal to each other, and a vertical direction orthogonal to the X-axis and the Y-axis is defined as a Z-axis direction.

The outer appearance inspection apparatus 1 is an apparatus for inspecting a surface defect of an inspection target object W to be inspected in outer appearance inspection processing described later.

According to the present embodiment, the inspection target object W is, for example, a wheel for a vehicle.

The inspection target object W of the present embodiment includes a predetermined thickness and a complicated surface shape including at least one through hole W1 that penetrates through the inspection target object W in a thickness direction.

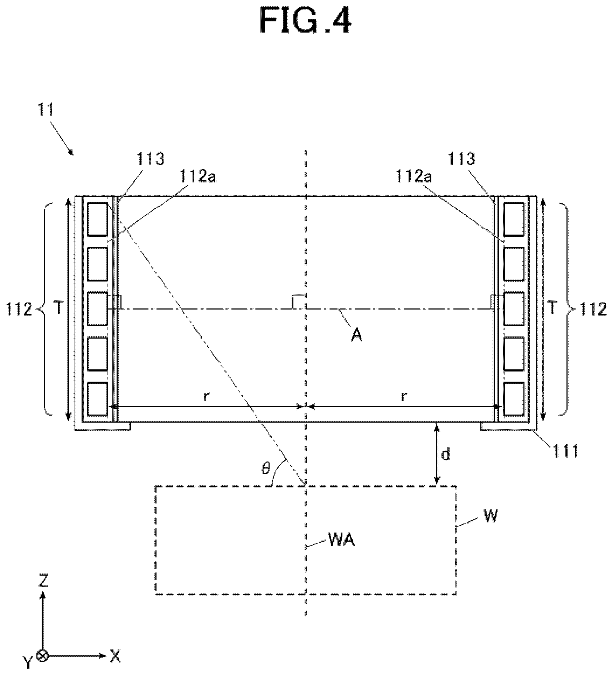

As illustrated in FIG. 2, in the outer appearance inspection, the inspection target object W is placed on a placement base D1 so that a thickness direction thereof extends along the Z-axis direction. The thickness direction of the inspection target object W is a direction along a center axis WA (refer to FIG. 4) of the inspection target object W.

The inspection unit 10 includes a first illumination section (illuminator) 11 and a second illumination section (illuminator) 12 that illuminate a surface of the inspection target object W, an imaging section (imager) 13 that images the surface of the inspection target object W, and the like.

The first illumination section 11 has a cylindrical shape, and a light source is disposed on an inner peripheral surface of the cylindrical shape. The configuration of the first illumination section 11 will be described in detail later.

The first illumination section 11 is disposed on a Z-axis positive direction side of the inspection target object W, and illuminates the inspection target object W from the Z-axis positive direction side.

The second illumination section 12 is disposed on the surface of the placement base D1 on which the inspection target object W is placed, and illuminates the inspection target object W from the Z-axis negative direction side. In other words, the second illumination section 12 illuminates the surface of the inspection target object W from the side opposite to the first illumination section 11 with the inspection target object W interposed therebetween.

Therefore, even an inner wall of the through hole W1 in the inspection target object W can be illuminated with the light emitted from the second illumination section 12. Therefore, it is possible to image even the inner wall of the through hole W1 of the inspection target object W by the imaging section 13, and thus it is possible to improve inspection performance in the outer appearance inspection.

The light applied from the second illumination section 12 is sufficiently diffused light that halation does not occur in a case where the light is included in the imaged image that is imaged by the imaging section 13.

When the inspection target object W does not have the through hole W1, the inspection unit 10 may not include the second illumination section 12.

The imaging section 13 includes two cameras installed so as to be able to image the inspection target object W from the Z-axis positive direction side. The two cameras are arranged so as to image the inspection target object W at imaging angles different from each other.

The imaging section 13 images the surface of the inspection target object W illuminated by the first illumination section 11 and the second illumination section 12, and outputs a monochrome or color imaged image to the processing apparatus 20.

FIG. 3 illustrates another example of the configuration of the inspection unit 10.

In the example illustrated in FIG. 3, the inspection unit 10 includes a rotating base D2 on which the placement base D1 is placed, and a driver 14 that rotates the rotating base D2 in a horizontal plane (XY plane). The driver 14 is connected to the processing apparatus 20, and the processing apparatus 20 controls the operation of the driver 14.

In this case, the imaging section 13 includes one camera, and images the surface of the inspection target object W on the rotating base D2 rotated by the driver 14. The processing apparatus 20 acquires the imaged image imaged by the imaging section 13, and also acquires, from the driver 14, rotation angle information indicating a rotation angle of the rotating base D2 at the time of imaging the imaged image.

The processing apparatus 20 is, for example, a personal computer. The processing apparatus 20 is connected to the imaging section 13 of the inspection unit 10 via wiring (not illustrated), and controls the operation of the imaging section 13. The processing apparatus 20 may be connected to the first illumination section 11 and the second illumination section 12 via wiring, and may control the operation of the first illumination section 11 and the second illumination section 12.

The processing apparatus 20 includes a controller 21, a storage section 22, a communicator 23, an operation part 24, and a display part 25.

The controller 21 includes, for example, a processor such as a central processing unit (CPU) or a micro processing unit (MPU), and a memory such as a random access memory (RAM). The controller 21 executes a program 22a stored in a memory such as a RAM, the storage section 22, or the like to realize various processes including the outer appearance inspection processing of the inspection target object W.

The controller 21 controls the imaging section 13 of the inspection unit 10 to image the surface of the inspection target object W.

The storage section 22 includes, for example, any storage module such as a hard disk drive (HDD), a solid state drive (SSD), a read only memory (ROM), a RAM, or the like. The storage section 22 stores, for example, a system program, an application program, and various kinds of data. To be specific, the storage section 22 stores a program 22a for executing the outer appearance inspection processing or the like of the inspection target object W.

The communicator 23 includes, for example, a network interface card (NIC), a communication module including a receiver and a transmitter, and the like. The communicator 23 communicates various information, data, and the like with an external device or the like connected via a communication network such as the Internet.

The operation part 24 includes, for example, a mouse, a keyboard, a switch, a button, and the like. The operation part 24 may be, for example, a touch screen integrally combined with the display part 25, or may be an interface that receives sound input. The operation part 24 receives an instruction corresponding to various input operations from a user, converts the received instruction into an operation signal, and outputs the operation signal to the controller 21.

The display part 25 is, for example, a liquid crystal display, an organic electro luminescence (EL) display, or the like. The display part 25 performs display based on display data output from the controller 21.

### <Configuration of First Illumination Section>

FIG. 4 is a cross-sectional view in a X-Z plane passing through a center of the first illumination section 11.

The first illumination section 11 includes an exterior part 111 having a cylindrical shape, a light source 112, and a diffusion plate 113.

The light source 112 is, for example, a plurality of light emitting diodes (LEDs), organic light emitting diodes (OLEDs), or the like, and is disposed on the inner peripheral surface of the exterior part 111.

The light source 112 emits light toward the center axis of the first illumination section 11. That is, the light source 112 does not emit light directly toward the inspection target object W. Thus, since it is possible to suppress the occurrence of halation due to the reflection light of the light source 112 being included in the imaged image of the inspection target object W, it is possible to improve the inspection performance in the outer appearance inspection.

The diffusion plate 113 is disposed inward from a light emitting surface 112a of the light source 112 in the first illumination section 11 and diffuses the light emitted from the light source 112.

In the first illumination section 11, as illustrated in FIG. 4, the light source 112 is arranged so as to surround the center axis WA of the inspection target object W. For example, the first illumination section 11 is arranged such that the center axis of the first illumination section 11 coincides with the center axis WA of the inspection target object W.

A normal line A of the light emitting surface 112a of the light source 112 is perpendicular to the center axis WA of the inspection target object W.

The length T of the light source 112 in the direction along the center axis WA (Z-axis direction) is greater than or equal to a radius r of the light emitting surface 112a of the light source 112 surrounding the center axis WA.

Accordingly, since an incident angle θ of the light irradiated from the light source 112 and diffused by the diffusion plate 113 with respect to the inspection target object W can be set to 45 degrees or more, the light can reach the inner wall of the through hole W1 of the inspection target object W. Therefore, the inner wall of the through hole W1 of the inspection target object W can be imaged by the imaging section 13.

Furthermore, as the length T of the light source 112 increases, the amount of light emitted from the light source 112 increases. Therefore, by setting the length T of the light source 112 to be equal to or larger than the radius r, it is possible to emphasize a contrast in the imaged image of the inspection target object W.

Thus, the inspection performance in the outer appearance inspection can be improved.

The length T of the light source 112 in the direction along the center axis WA is less than or equal to twice the radius r of the light emitting surface 112a of the light source 112 surrounding the center axis WA.

As the length T of the light source 112 increases, the distance between the imaging section 13 disposed on the Z-axis positive direction side of the first illumination section 11 and the inspection target object W increases. Therefore, the field of view of the imaging section 13 with respect to the inspection target object W is narrowed. Thus, a shadow is generated in the imaged image, and a problem that a part of the surface of the inspection target object W is not imaged due to the shadow (occlusion) may occur. In contrast, since the occlusion in the imaged image can be suppressed by setting the length T of the light source 112 to be less than or equal to twice the radius r, inspection performance in the outer appearance inspection can be improved.

Furthermore, as the length T of the light source 112 increases, the manufacturing cost and the operation cost of the first illumination section 11 increase. In contrast, by setting the length T of the light source 112 to be less than or equal to twice the radius r, it is possible to suppress the cost of the first illumination section 11.

The distance d from the light source 112 to the inspection target object W in the direction along the direction of the center axis WA is equal to or smaller than the radius r of the light emitting surface 112a of the light source 112 surrounding the center axis WA.

Accordingly, since an incident angle θ of the light irradiated from the light source 112 and diffused by the diffusion plate 113 with respect to the inspection target object W can be set to 45 degrees or more, the light can reach the inner wall of the through hole W1 of the inspection target object W. Therefore, it is possible to image even the inner wall of the through hole W1 of the inspection target object W by the imaging section 13, and thus it is possible to improve the inspection performance in the outer appearance inspection.

The first illumination section 11 is not limited to the cylindrical shape illustrated in FIG. 4 as long as the light source has a shape surrounding the center axis WA of the inspection target object W.

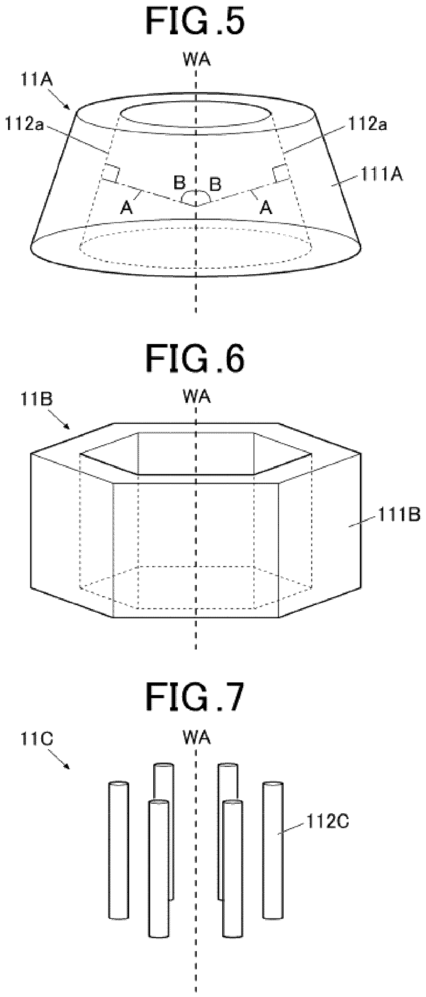

FIG. 5 to FIG. 7 illustrate first illumination sections 11A to 11C that are other examples of the first illumination section 11.

The exterior part 111A included in the first illumination section 11A illustrated in FIG. 5 has a cylindrical truncated conical shape.

In the example shown in FIG. 5, an angle B formed by the normal line A of the light emitting surface 112a of the light source and the center axis WA of the inspection target object W is 45 degrees or less.

The exterior part 111B included in the first illumination section 11B illustrated in FIG. 6 has a tubular polygonal shape.

The first illumination section 11C illustrated in FIG. 7 includes a plurality of long bar light sources 112C disposed so as to surround the center axis WA of the inspection target object W.

### < Operation of Outer Appearance Inspection Apparatus >

Next, an operation of the outer appearance inspection apparatus 1 according to the present embodiment will be described.

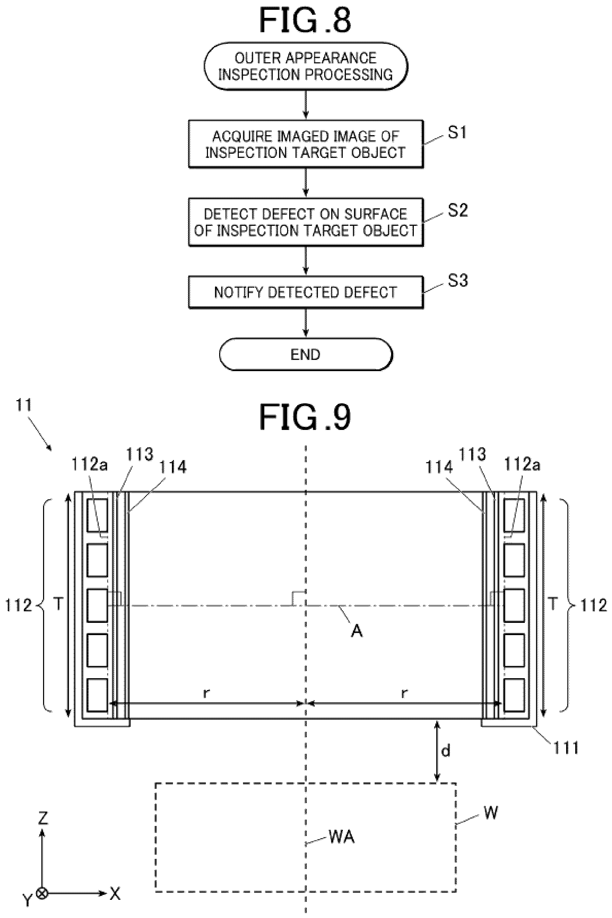

The controller 21 of the processing apparatus 20 performs the outer appearance inspection processing (see FIG. 8) for inspecting the surface condition of the inspection target object W. The controller 21 functions as an inspection section (inspector).

### (Outer Appearance Inspection Processing)

The controller 21 controls the imaging section 13 to image the surface of the inspection target object W illuminated by the first illumination section 11 and the second illumination section 12, and acquires the imaged image (step S1).

Next, the controller 21 detects a defect on the surface of the inspection target object W based on the imaged image acquired in step S1 (step S2). The defect on the surface of the inspection target object W is, for example, fine irregularities, scratches, stains, and the like.

In step S2, the controller 21 applies a rule-based method. Specifically, the controller 21 performs edge detection in the imaged image of the inspection target object W using a differential filter. Detecting a portion in an image where a brightness suddenly changes is referred to as edge detection.

Next, the controller 21 binarizes the edge detected imaged image with a predetermined threshold to detect discontinuous points on the surface of the inspection target object W as the defect.

In step S2, the controller 21 may apply a non-rule-based method. Specifically, the controller 21 inputs the imaged image of the inspection target object W into an object detection model using deep learning, and causes the defect on the surface of the inspection target object W to be output. The object detection model is, for example, an R-CNN model, a single-shot multi-box detection (Single Shot Multibox Detector, SSD) model, or a single check (You Only Look Once, YOLO) detection model.

Next, the controller 21 notifies the user of information about the defect on the surface of the inspection target object W detected in step S2 by, for example, displaying the information on the display part 25 (step S3), and ends the outer appearance inspection processing. The information regarding the defect on the surface of the inspection target object W includes a position of the defect in the imaged image, the rotation angle of the rotating base D2 at the time of imaging the imaged image, and the like.

### <Modification Example>

Although the present embodiment has been described above, the specific configuration is not limited to the above-described present embodiment and can be changed without departing from the spirit and scope of the invention. Hereinafter, modification examples of the present embodiment will be described. In the modification examples, components similar to those of the above embodiment are denoted by the same reference numerals, and description thereof will be omitted.

FIG. 9 illustrates a cross-sectional view in a X-Z plane passing through the center of the first illumination section 11 in a modification example.

The first illumination section 11 of the modification example further includes the polarizing plate 114 on the side of the light emitting surface 112a of the light source 112.

The polarizing plate 114 is disposed further to the inside than the diffusion plate 113 in the first illumination section 11.

The polarizing plate 114 transmits, of the light diffused by the diffusion plate 113, linearly polarized light having a plane of vibration in the direction along the center axis WA of the inspection target object W (Z-axis direction) or in a circumferential direction of the first illumination section 11.

The imaging section 13 of the modification example images a plurality of polarization imaged images having different polarizing directions. The different polarizing directions are, for example, 0 degrees, 45 degrees, 90 degrees, and 135 degrees.

Specifically, the imaging section 13 includes a camera in which a linear polarization filter is disposed in front of a lens, and performs imaging while rotating the linear polarization filter.

Alternatively, the imaging section 13 may include a camera in which polarizers of four directions (0 degrees, 45 degrees, 90 degrees, and 135 degrees) are mounted on an imager.

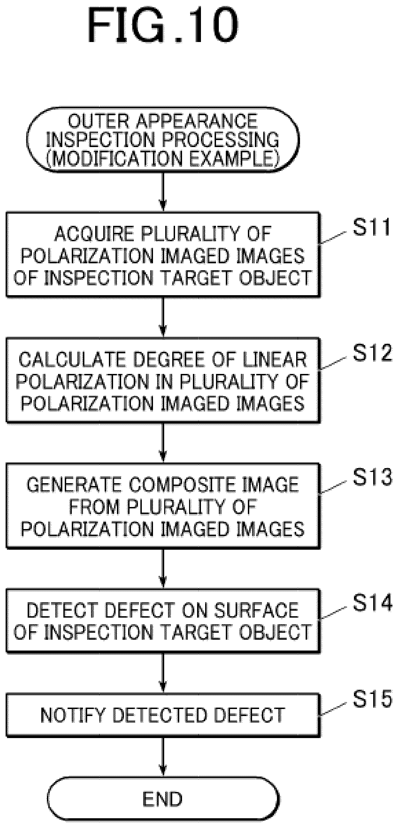

FIG. 10 shows a flowchart of the outer appearance inspection processing in the modification example.

### (Outer Appearance Inspection Processing of Modification Example)

The controller 21 of the processing apparatus 20 controls the imaging section 13 to image the surface of the inspection target object W illuminated by the first illumination section 11 and the second illumination section 12, and acquires a plurality of polarization imaged images having different polarizing directions (step S11).

Next, the controller 21 calculates the degree of linear polarization (DoLP) for each pixel position in the plurality of polarization imaged images acquired in step S 11 (step S12).

The controller 21 executes step S12 at every pixel position in the polarization imaged image.

Next, the controller 21 generates one composite image from the plurality of polarization imaged images acquired in step S11, based on the degree of linear polarization calculated in step S12 (step S13).

It is considered that specular reflection components of light, which are reflections of the light source 112, are large at the pixel position at which the degree of linear polarization calculated in step S12 is larger than the predetermined threshold.

Therefore, in step S13, the controller 21 applies, to the pixel position whose degree of linear polarization is higher than the predetermined threshold, the polarization imaged image whose polarizing direction is orthogonal to the polarizing direction of the polarization imaged image whose degree of linear polarization is the highest among the plurality of polarization imaged images.

For example, when the polarizing direction of the polarization imaged image having the maximum degree of linear polarization is 0 degrees, the controller 21 applies the polarization imaged image of 90 degrees which is the polarizing direction orthogonal to 0 degrees.

Therefore, in the composite image generated in step S13, it is possible to suppress the occurrence of halation due to the reflection light of the light source 112 reflected off the surface of the inspection target object W being imaged. Thus, the inspection performance in the outer appearance inspection can be improved.

Next, the controller 21 detects the defect on the surface of the inspection target object W based on the image generated in step S13 (step S14).

Next, the controller 21 executes step S15 similar to step S3 of the outer appearance inspection processing in the above-described embodiment, and ends the outer appearance inspection processing of the modification example.

### <Effect>

As described above, the outer appearance inspection apparatus 1 according to the present embodiment includes the first illumination section 11 that illuminates the surface of the inspection target object W.

The outer appearance inspection apparatus 1 includes the imaging section 13 that images the surface of the inspection target object W illuminated by the first illumination section 11.

The outer appearance inspection apparatus 1 includes the inspection section (controller 21) that inspects the surface state of the inspection target object W based on the imaged image imaged by the imaging section 13.

The first illumination section 11 includes the light source 112 that surrounds the center axis WA of the inspection target object W.

The normal line A of the light emitting surface 112a of the light source 112 is perpendicular to or equal to or within 45 degrees of the center axis. In addition, the length T of the light source 112 in the direction along the center axis WA is equal to or larger than the radius r of the light source 112 surrounding the center axis WA.

Therefore, it is possible to suppress the occurrence of halation due to the reflection light of the light source 112 being included in the imaged image of the inspection target object W.

Further, since the incident angle θ of the light irradiated from the light source 112 and diffused by the diffusion plate 113 with respect to the inspection target object W can be set to 45 degrees or more, the light can reach the inner wall of the through hole W1 of the inspection target object W. Therefore, the inner wall of the through hole W1 of the inspection target object W can be imaged by the imaging section 13.

Furthermore, the contrast can be enhanced in the imaged image of the inspection target object W.

Thus, the defect on the surface of the inspection target object W can be detected with high accuracy. Therefore, it is possible to perform highly accurate outer appearance inspection.

In the outer appearance inspection apparatus 1 according to the present embodiment, the length T of the light source 112 in the direction along the center axis WA is equal to or less than twice the radius r of the light source 112 surrounding the center axis WA.

Therefore, since the occlusion in the imaged image of the inspection target object W can be suppressed, the inspection performance in the outer appearance inspection can be improved.

Furthermore, the cost of the first illumination section 11 can be suppressed.

In the outer appearance inspection apparatus 1 according to the present embodiment, the distance d from the light source 112 to the inspection target object W in the direction along the center axis WA is equal to or less than the radius r of the light source 112 along the center axis WA.

Accordingly, since the incident angle θ of the light irradiated from the light source 112 and diffused by the diffusion plate 113 with respect to the inspection target object W can be set to 45 degrees or more, the light can reach the inner wall of the through hole W1 of the inspection target object W. Therefore, it is possible to image even the inner wall of the through hole W1 of the inspection target object W by the imaging section 13, and thus it is possible to improve inspection performance in the outer appearance inspection.

In the outer appearance inspection apparatus 1 according to the present embodiment, the inspection target object W includes the through hole W1 that penetrates the inspection target object W in the direction along the center axis.

The outer appearance inspection apparatus 1 includes the second illumination section 12 that illuminates the surface of the inspection target object W from the side opposite to the first illumination section 11 with the inspection target object W interposed therebetween.

Therefore, even the inner wall of the through hole W1 in the inspection target object W can be illuminated with the light emitted from the second illumination section 12. Therefore, it is possible to image even the inner wall of the through hole W1 of the inspection target object W by the imaging section 13, and thus it is possible to improve inspection performance in the outer appearance inspection.

In the outer appearance inspection apparatus 1 according to the present embodiment, the first illumination section 11 includes the polarizing plate 114 on the side of the light emitting surface 112a of the light source 112.

The imaging section 13 images a plurality of polarization imaged images having different polarizing directions.

Therefore, it is possible to suppress the occurrence of halation due to the reflection light of the light source 112 reflected off the surface of the inspection target object W being caught in the composite image generated from the plurality of polarization imaged images having different polarizing directions. Thus, the inspection performance in the outer appearance inspection can be improved.

Although the present invention has been described in detail based on the embodiment, the present invention is not limited to the above-described embodiment. The embodiment can be modified without departing from the spirit and scope of the invention.

For example, in the above-described embodiment, the case where the inspection target object W to be inspected is the wheel for the vehicle has been illustrated and described, but the present invention is not limited thereto. A highly accurate outer appearance inspection can be performed on the inspection target other than the wheel for the vehicle by applying the present invention.

Although embodiments of the present invention have been described and shown in detail, the disclosed embodiments are made for purposes of illustration and example only and not limitation. The scope of the present invention should be interpreted by terms of the appended claims.

## Claims

1. An outer appearance inspection apparatus comprising:
a first illuminator that illuminates a surface of an inspection target object;
an imager that images the surface of the inspection target object illuminated by the first illuminator; and
an inspector that inspects a surface state of the inspection target object based on the imaged image imaged by the imager,
wherein,
the first illuminator includes a light source that surrounds a center axis of the inspection target object, and
a normal line of a light emitting surface of the light source is perpendicular to the center axis or equal to or within 45 degrees with respect to the center axis, and a length of the light source in a direction along the center axis is equal to or larger than a radius of the light source surrounding the center axis.

2. The outer appearance inspection apparatus according to claim 1, wherein the length of the light source in the direction along the center axis is less than or equal to twice the radius of the light source surrounding the center axis.

3. The outer appearance inspection apparatus according to claim 1, wherein the distance from the light source to the inspection target object in the direction along the center axis is equal to or less than the radius of the light source surrounding the center axis.

4. The outer appearance inspection apparatus according to claim 1, wherein,
the inspection target object includes a through hole that penetrates through the inspection target object in the direction along the center axis, and
the outer appearance inspection apparatus further comprises a second illuminator that illuminates the surface of the inspection target object from a side opposite to the first illuminator with the inspection target object interposed therebetween.

5. The outer appearance inspection apparatus according to claim 1, wherein,
the first illuminator includes a polarizing plate on a light emitting surface side of the light source, and
the imager images a plurality of polarization imaged images including different polarizing directions.
